# DEMANDE DE BREVET EUROPEEN

(11) **EP 1 873 406 A1**
(43) Date de publication de la demande: **02.01.2008**
(21) Numéro de dépôt: 07111129.8
(22) Date de dépôt: 27.06.2007
(51) Int. Cl.: F16B 37/06

(54) **Ecrou à sertir**

(30) Priorité: 27.06.2006 FR 0652674
(71) Demandeur: La Clusienne - Clufix, 74300 Cluses (FR)
(72) Inventeur: Mogeny, Joël, 74310 Servoz (FR)
(74) Mandataire: Poncet, Jean-François

(57) **Abrégé**

Ecrou à sertir en aveugle dans un trou d'une paroi, comprenant un noyau (1) et une douille (2). Le noyau (1) a des extrémités proximale (1a) et distale (1 b), avec un alésage interne taraudé (1 c) le traversant de part en part. La douille (2), à paroi au moins en partie déformable, comporte un alésage interne (2c) la traversant depuis une face proximale (20a) jusqu'à une face distale (20b) et conformé pour recevoir le noyau (1), et comporte une extrémité distale (2b) ayant un diamètre intérieur (D1) sensiblement égal au diamètre extérieur (D2) de l'extrémité proximale (1a) du noyau (1). La douille (2) est pourvue, au voisinage de son extrémité distale (2b), d'un bourrelet périphérique (9) de diamètre extérieur (D6) égal ou peu inférieur au diamètre du trou de la paroi dans lequel doit être installé l'écrou à sertir.

## Description

La présente invention concerne un écrou à sertir, et plus particulièrement un écrou à sertir en aveugle dans un trou d'une paroi mince. Un écrou à sertir en aveugle est adapté pour être mis en place dans le trou d'une paroi mince alors que la face postérieure de la paroi mince est inaccessible. L'introduction et la mise en place de l'écrou à sertir ne peuvent donc s'effectuer qu'en faisant pénétrer l'écrou à sertir dans le trou depuis la face antérieure de la paroi mince, et en agissant depuis cette face antérieure de paroi mince.

De tels écrous sont notamment utilisés dans les assemblages sur des tôles, plaques métalliques minces, profilés ou tubes à corps creux sur lesquels on veut pouvoir fixer ensuite un élément fileté tel qu'une vis. L'épaisseur de la tôle, de la plaque métallique, du profilé ou du tube à corps creux étant trop réduite pour réaliser un alésage taraudé mécaniquement résistant, on rapporte un écrou à sertir qui comporte un alésage taraudé satisfaisant.

Généralement, un écrou à sertir en aveugle se présente sous la forme d'un corps cylindrique de révolution muni d'un alésage interne, comportant au voisinage de son extrémité proximale une collerette périphérique de diamètre extérieur supérieur au diamètre extérieur du corps cylindrique, comportant au voisinage de son extrémité distale un taraudage pratiqué dans l'alésage interne, et comportant un tronçon médian de corps cylindrique capable de se déformer sous contrainte.

Au cours de l'opération de pose d'un tel écrou à sertir en aveugle, le corps cylindrique de révolution est inséré dans un trou d'une paroi mince jusqu'à ce que la collerette périphérique vienne en butée contre la face antérieure de la paroi mince. Une traction est alors exercée par une tige filetée engagée depuis l'extrémité proximale dans le taraudage de l'extrémité distale du corps cylindrique. La traction est exercée dans le sens allant depuis l'extrémité distale du corps cylindrique en direction de son extrémité proximale, tout en maintenant la collerette périphérique au contact de la face antérieure de la paroi mince. Sous la force de traction, le tronçon médian du corps cylindrique se déforme par raccourcissement axial et expansion radiale pour venir former un bourrelet en butée sur la face postérieure de la paroi mince. L'écrou à sertir est ainsi tenu de part et d'autre de la paroi mince par sa collerette périphérique d'une part et par son bourrelet d'autre part. La force de pincement exercée sur la paroi mince entre la collerette périphérique et le bourrelet permet un blocage en rotation de l'écrou à sertir en aveugle dans le trou de la paroi mince.

D'autres structures d'écrou à sertir en aveugle sont décrites dans les documents FR 2 532 015 A1 ou US 4,400,960 A. Ces structures comprennent un noyau tronconique à alésage interne taraudé pouvant être tiré dans une douille à paroi cylindrique pour réaliser son expansion.

Un inconvénient des écrous à sertir en aveugle conventionnels tels que décrits ci-dessus est leur fort dépassement à l'écart de la face postérieure de la paroi mince une fois que ceux-ci ont été installés dans le trou de la paroi mince. Ce fort dépassement nécessite la présence d'un espace derrière la paroi mince, et cela limite les possibilités d'utilisation d'un tel écrou à sertir. En outre, ce fort dépassement n'a pas une valeur identique pour des épaisseurs de paroi différentes.

En outre, le pincement de la paroi mince entre la collerette périphérique et le bourrelet de l'écrou à sertir est lui aussi fonction de la déformation du corps cylindrique de révolution. Or, si le pincement n'est pas suffisant, l'écrou à sertir pourra être libre en rotation dans le trou de la paroi mince et il ne sera alors plus possible de l'utiliser pour y serrer un élément fileté tel qu'une vis.

Enfin, il peut se présenter un manque de retenue du noyau dans la douille, pouvant conduire à un dénoyautage de l'écrou serti (le noyau se séparant alors axialement de la douille en direction du côté inaccessible de la paroi mince) ou à une extraction (la douille et le noyau s'extrayant alors de la paroi en direction du côté accessible de la paroi mince).

Un premier problème proposé par l'invention est de réduire le dépassement d'un écrou à sertir en aveugle à l'écart de la face postérieure de la paroi mince après son installation, et de faire en sorte qu'un dépassement de même valeur à l'écart de la face postérieure de paroi mince puisse être obtenu de façon répétitive.

Selon un autre aspect, l'invention vise à réaliser un écrou à sertir en aveugle qui soit aisé et rapide à installer, et qui possède une tenue suffisante dans le trou de la paroi mince, c'est-à-dire ne pouvant pas être extrait du trou par traction ou poussée et ne pouvant pas acquérir de liberté en rotation dans le trou de la paroi mince.

Pour atteindre ces objets, ainsi que d'autres, l'invention propose un écrou à sertir en aveugle, pour sertissage dans un trou d'une paroi mince ayant une face postérieure et une face antérieure, l'écrou comprenant :
- un noyau, avec des extrémités proximale et distale, avec un alésage interne taraudé le traversant de part en part, et avec, au moins au voisinage de son extrémité distale, une surface extérieure tronconique dont le diamètre va en croissant en direction de son extrémité distale,
- une douille à paroi au moins en partie déformable, comportant un alésage cylindrique interne la traversant depuis une face proximale jusqu'à une face distale et conformé pour recevoir le noyau, l'alésage cylindrique interne ayant, au voisinage de l'extrémité distale, un diamètre intérieur sensiblement égal au diamètre extérieur de l'extrémité proximale du noyau,
et dans lequel la douille comporte :
- au voisinage de son extrémité distale, un bourrelet périphérique ayant un diamètre extérieur,
- un tronçon intermédiaire, adjacent au bourrelet, qui s'étend en direction de l'extrémité proximale de la douille, et qui présente un diamètre extérieur inférieur au diamètre extérieur du bourrelet,
- une surface de contact annulaire conformée pour venir en appui contre la paroi latérale du trou, sur toute la hauteur du trou, après déformation résultant de la pénétration du noyau dans l'alésage interne de la douille.

Lors de la pose d'un tel écrou à sertir en aveugle, la douille à paroi déformable est insérée dans le trou d'une paroi mince avec son extrémité distale dépassant seulement légèrement au-delà de la face postérieure de la paroi mince, le noyau étant en position distale, hors de la douille. On provoque par traction la pénétration du noyau dans la douille depuis la face distale. Au cours de la pénétration du noyau dans la douille à paroi déformable, le bourrelet périphérique prévu au voisinage de l'extrémité distale de la douille subit une expansion radiale pour obtenir un diamètre extérieur final supérieur au diamètre du trou de la paroi. Le bourrelet périphérique formé à l'extrémité distale de la douille vient en butée contre la face postérieure de la paroi mince. Le bourrelet périphérique à l'extrémité distale de la douille empêche toute extraction de l'écrou à sertir en aveugle hors du trou de la paroi mince par une traction s'exerçant dans la direction allant à l'écart de la face antérieure de la paroi mince. Simultanément, le noyau dilate radialement la douille dans le trou de la paroi mince de telle façon que sa surface de contact annulaire soit en contact continu avec la paroi périphérique du trou selon toute sa hauteur. Ainsi, malgré la faible épaisseur de la paroi mince, l'écrou à sertir est solidement fixé à la paroi mince et il est impossible de faire tourner l'écrou à sertir dans le trou de la paroi mince.

Un tel écrou à sertir en aveugle, une fois installé, ne présente qu'un dépassement nul ou très faible à l'écart de la face postérieure de la paroi mince.

Enfin, le dépassement à l'écart de la face postérieure de la paroi mince d'un tel écrou à sertir est sensiblement constant et connu, ce qui permet de l'utiliser dans des assemblages à encombrement réduit où la place disponible doit être très strictement économisée.

De préférence, le noyau et la douille peuvent avoir des longueurs axiales respectives sensiblement égales.

Avantageusement, avant usage, l'extrémité proximale du noyau peut être solidaire, selon une zone annulaire de liaison de faible résistance mécanique, de l'extrémité distale de la douille, le noyau et la douille étant coaxiaux.

L'écrou à sertir en aveugle est ainsi constitué d'un noyau et d'une douille qui sont d'une seule pièce. Un tel écrou à sertir en aveugle monobloc évite la perte de l'un ou l'autre de ses éléments constitutifs, ceux-ci étant parfaitement solidaires. En outre, une telle pièce monobloc est facilement réalisable par tournage, ce qui permet de respecter strictement les cotes respectives de l'écrou et de la douille pour que celles-ci soient en parfaite adéquation. En outre, réaliser en une seule opération de tournage le noyau et la douille de l'écrou à sertir permet une économie de temps non négligeable.

Avantageusement, on peut prévoir que :
- la douille comporte un alésage interne cylindrique de section circulaire,
- la douille comporte une surface extérieure tronconique, avec une extrémité proximale de diamètre extérieur supérieur au diamètre extérieur de l'extrémité distale de la douille.

De préférence, on peut prévoir que :
- le noyau comporte une surface extérieure tronconique dont le diamètre va en croissant depuis son extrémité proximale jusqu'à son extrémité distale,
- le noyau et la douille ont des angles de cône sensiblement égaux.

Un tel noyau permet de déformer radialement la paroi de la douille de façon continue et progressive au fur et à mesure de la pénétration du noyau dans la douille.

En outre, le noyau est ainsi au contact de la douille selon la totalité de sa surface extérieure tronconique pour garantir sa retenue axiale dans la douille.

Enfin, par le choix des angles de cônes, un tel écrou à sertir présente une surface extérieure sensiblement cylindrique une fois serti. Il est ainsi utilisable pour des parois d'épaisseurs différentes.

De préférence, en variante de ce premier mode de réalisation, on peut prévoir que :
- le noyau est pourvu, au voisinage de son extrémité distale, d'une collerette périphérique,
- le diamètre extérieur de la collerette périphérique est supérieur au diamètre intérieur de l'alésage interne de la douille au voisinage de l'extrémité distale de la douille.

Selon un second mode de réalisation de l'invention, on peut prévoir que :
- le noyau comporte un tronçon distal tronconique dont le diamètre va en croissant en direction de l'extrémité distale du noyau,
- le noyau comporte un tronçon proximal cylindrique à section transversale circulaire,
- la douille comporte un tronçon proximal à section transversale supérieure au diamètre du trou de la paroi,
- la douille comporte un tronçon distal à paroi déformable, à section transversale de diamètre extérieur maximal peu inférieur au diamètre du trou de la paroi, destiné à pénétrer dans le trou de la paroi,
- un épaulement de raccordement à face frontale sensiblement annulaire relie les tronçons distal et proximal de la douille.

Un tel écrou à sertir en aveugle est adapté pour être serti dans une paroi d'épaisseur définie.

Un tel écrou à sertir comporte une excellente résistance à l'arrachement sous des contraintes axiales : le tronçon distal de la douille, après avoir subi une expansion, empêche tout arrachement de l'écrou serti à l'écart de la face antérieure de la paroi mince. Le tronçon proximal de la douille permet quant à lui d'éviter tout risque d'enfoncement de l'écrou serti au travers de la paroi mince : le tronçon proximal de la douille vient en butée contre la face antérieure de la paroi mince.

Un tel écrou à sertir présente également une grande résistance au dénoyautage : le noyau est en contact selon toute la surface extérieure cylindrique de son tronçon proximal avec l'alésage interne de la douille.

L'utilisation d'un noyau à surface extérieure seulement partiellement tronconique permet également de limiter le risque de serrage de la tige filetée de traction du dispositif de pose par la matière constitutive du noyau, la part de matière du noyau impliquée dans ce phénomène de serrage étant moindre.

Avantageusement, on peut prévoir que le tronçon proximal cylindrique à section circulaire du noyau comporte un diamètre extérieur égal ou peu supérieur au diamètre intérieur de l'alésage interne de la douille.

Lors de la pénétration du noyau dans l'alésage interne de la douille, le tronçon proximal cylindrique est inséré en force selon un montage serré. Ce montage serré permet de limiter encore le risque de dénoyautage de l'écrou serti et le risque que le noyau acquière un degré de liberté en rotation dans la douille une fois l'écrou à sertir installé.

De préférence, l'épaulement de raccordement peut comporter un logement annulaire ouvert sur la face annulaire, le logement annulaire étant disposé de préférence au voisinage du plus faible rayon de la face annulaire.

Lors de l'installation de l'écrou à sertir dans le trou de la paroi, la paroi est pincée entre le bourrelet périphérique et la surface annulaire de contact du tronçon distal de la douille, et l'épaulement du tronçon proximal de la douille. Ce pincement provoque localement le fluage d'une partie de la matière de la paroi dans le logement annulaire prévu sur la face annulaire de l'épaulement de la douille.

Ce fluage de la matière de la paroi permet de répartir les forces axiales qui pourraient s'appliquer sur l'écrou serti sur une plus grande surface de la paroi. En outre, la matière qui a flué dans le logement annulaire prévu sur la face annulaire de l'épaulement de raccordement diminue le risque que la douille n'acquière un degré de liberté en rotation dans le trou de la paroi.

Avantageusement, le tronçon distal de la douille peut comporter une pluralité de tronçons cylindriques à section circulaire dont les diamètres extérieurs vont en croissant en direction de l'extrémité distale de la douille.

Avantageusement, le tronçon distal de la douille peut avoir une longueur axiale supérieure, de préférence peu supérieure, à l'épaisseur de la paroi.

Avantageusement, l'alésage interne de la douille peut comporter un chanfrein à l'extrémité proximale de la douille.

Afin de procéder à la pose du premier mode de réalisation de l'écrou à sertir en aveugle selon l'invention, il est proposé un dispositif de pose comportant :
- des premiers moyens de positionnement, positionnant le dispositif de pose par rapport à la paroi mince, en prenant de préférence appui sur la face antérieure de la paroi mince,
- des seconds moyens de positionnement, positionnant l'écrou à sertir en aveugle par rapport au dispositif de pose, réalisant de préférence une butée d'appui contre laquelle porte la face proximale de la douille,
- une tige filetée, destinée à se visser dans l'alésage interne taraudé du noyau en passant au travers de l'alésage interne de la douille, et pouvant se déplacer axialement par rapport aux seconds moyens de positionnement.

Un tel dispositif de pose est simple à fabriquer et à utiliser, et permet une mise en place précise, rapide et simple de l'écrou à sertir en aveugle du premier mode de réalisation de l'invention.

Avantageusement, on peut prévoir que dans le dispositif de pose :
- les seconds moyens de positionnement comprennent un premier tube, disposé de façon coaxiale à la tige filetée, et prenant appui à son extrémité sur la face proximale de la douille,
- les premiers moyens de positionnement comprennent un second tube, disposé de façon coaxiale au premier tube.

Afin de mettre en place un écrou à sertir en aveugle selon le deuxième mode de réalisation de l'invention, il est également proposé un second dispositif de pose d'un écrou à sertir en aveugle, comportant :
- une tige filetée destinée à se visser dans l'alésage interne taraudé du noyau en passant au travers de l'alésage interne de la douille,
- des moyens de positionnement de l'écrou à sertir en aveugle par rapport au dispositif de pose, réalisant une butée d'appui contre laquelle porte la face proximale de la douille, comportant de préférence un tube disposé de façon coaxiale à la tige filetée et prenant appui à son extrémité sur la face proximale de la douille,
et dans lequel la tige filetée peut se déplacer longitudinalement selon son axe par rapport aux moyens de positionnement.

Afin d'installer les écrous à sertir en aveugle du premier mode de réalisation de l'invention, il est également proposé un procédé de pose d'un écrou à sertir en aveugle, comportant au moins les étapes suivantes :
a) visser la tige filetée du dispositif dans l'alésage interne taraudé du noyau, en pénétrant dans le noyau depuis l'extrémité proximale du noyau vers son extrémité distale,
b) positionner les seconds moyens de positionnement en appui sur la face proximale de la douille,
c) positionner le dispositif de pose par rapport à la face antérieure de la paroi mince, en prenant de préférence appui, avec le second tube des premiers moyens de positionnement, sur la face antérieure de la paroi mince, afin d'engager la douille dans le trou destiné à recevoir l'écrou à sertir en aveugle,
d) effectuer, par l'intermédiaire de la tige filetée, une traction à l'écart de la paroi mince, afin de faire pénétrer le noyau dans la douille,
e) dévisser la tige filetée en prise dans le noyau.

Afin d'installer et mettre en place les écrous à sertir en aveugle du second mode de réalisation de l'invention, il est également proposé un procédé de pose d'un écrou à sertir en aveugle, comportant au moins les étapes suivantes :
a") visser la tige filetée du dispositif dans l'alésage interne taraudé du noyau, en pénétrant dans le noyau depuis l'extrémité proximale du noyau vers son extrémité distale, jusqu'à positionner l'écrou à sertir en aveugle par rapport au dispositif de pose en réalisant une butée d'appui des moyens de positionnement contre la face proximale de la douille,
b") insérer le noyau et la douille dans le trou, jusqu'à ce que l'épaulement de raccordement de la douille vienne en butée contre la face antérieure de la paroi mince,
c") effectuer par l'intermédiaire de la tige filetée une traction à l'écart de la paroi mince, afin de faire pénétrer le noyau dans la douille,
d") dévisser la tige filetée en prise dans le noyau.

D'autres objets, caractéristiques et avantages de la présente invention ressortiront de la description suivante de modes de réalisation particuliers, faite en relation avec les figures jointes, parmi lesquelles :
- la figure 1 est une vue de côté en coupe longitudinale partielle d'un premier mode de réalisation d'écrou à sertir en aveugle selon l'invention ;
- la figure 2 est une vue en coupe longitudinale partielle de l'écrou à sertir en aveugle de la figure 1 installé dans un trou d'une paroi mince ;
- la figure 3 est une vue en coupe longitudinale partielle d'une variante de l'écrou à sertir en aveugle des figures 1 et 2 ;
- les figures 4 à 6 illustrent un dispositif et le procédé de pose du premier mode de réalisation d'écrou à sertir en aveugle illustré sur les figures 1 à 3 ;
- la figure 7 est une vue de côté en coupe longitudinale partielle d'un second mode de réalisation d'écrou à sertir en aveugle selon l'invention ;
- les figures 8 et 9 sont des vues de détail de l'écrou à sertir en aveugle de la figure 7;
- la figure 10 est une vue en coupe longitudinale partielle d'une variante de l'écrou à sertir en aveugle de la figure 7 ;
- la figure 11 est une vue en coupe longitudinale partielle de l'écrou à sertir en aveugle de la figure 10 installé dans un trou d'une paroi mince ;
- les figures 12 et 13 illustrent un dispositif et le procédé de pose du second mode de réalisation d'écrou à sertir en aveugle illustré sur les figures 7 à 11 ;
- les figures 14 et 15 sont des vues de détail en coupe du dispositif de pose du second mode de réalisation d'écrou à sertir en aveugle illustré sur les figures 7 à 11 ;
- la figure 16 est une vue en coupe longitudinale partielle d'un mode de réalisation indépendant d'écrou à sertir en aveugle ; et
- les figures 17 à 20 illustrent un dispositif et le procédé de pose de l'écrou à sertir en aveugle de la figure 16.

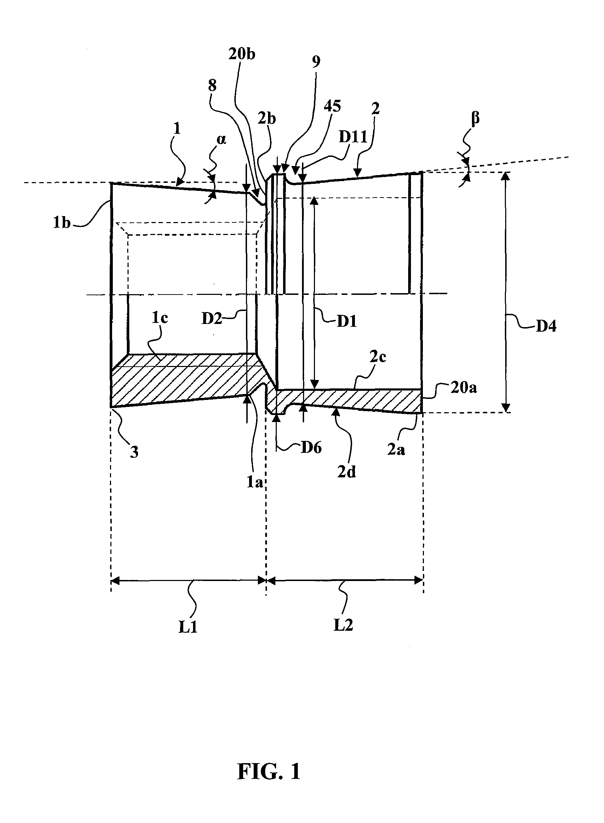

Un premier mode de réalisation d'un écrou à sertir en aveugle selon l'invention est représenté sur la figure 1. Celui-ci comporte un noyau 1 avec une extrémité proximale 1 a, une extrémité distale 1b, et un alésage interne taraudé 1 c le traversant de part en part.

L'écrou à sertir en aveugle de la figure 1 comporte également une douille 2 à paroi au moins en partie déformable, ayant un alésage interne 2c la traversant depuis une face proximale 20a jusqu'à une face distale 20b et conformé pour recevoir le noyau 1. La douille 2 a une extrémité distale 2b ayant un diamètre intérieur D1 sensiblement égal au diamètre extérieur D2 de l'extrémité proximale 1a du noyau 1.

La douille 2 comporte, au voisinage de son extrémité distale 2b, un bourrelet périphérique 9. Le diamètre extérieur D6 du bourrelet périphérique 9 est égal ou peu inférieur au diamètre du trou de la paroi dans laquelle l'écrou à sertir doit être installé.

La douille 2 comporte, adjacent au bourrelet périphérique 9, un tronçon intermédiaire 45, qui s'étend en direction de l'extrémité distale 2b, et qui forme, avec le bourrelet périphérique 9, une surface de contact 2d annulaire de la douille. Dans le tronçon intermédiaire 45, le diamètre extérieur D11 de la douille 2 est inférieur au diamètre D6 du bourrelet 9.

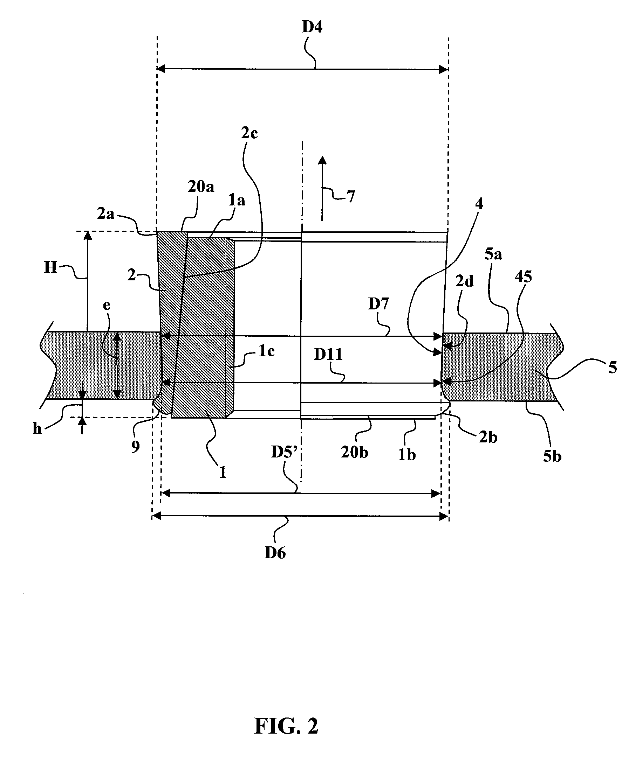

La figure 2 est une coupe longitudinale partielle sur laquelle l'écrou à sertir en aveugle de la figure 1 est représenté en position dans un trou 4 d'une paroi mince 5.

Le noyau 1 a été inséré dans l'alésage interne 2c de la douille 2 à paroi au moins en partie déformable. Lors de sa progression dans la douille 2, le noyau 1 est venu déformer la paroi de la douille 2 au voisinage de son extrémité distale 2b. Le bourrelet périphérique 9 a ainsi été dilaté radialement pour présenter finalement un diamètre extérieur D6 supérieur au diamètre D7 du trou 4 afin de venir en butée contre la face postérieure 5b de la paroi mince 5. Il est ainsi impossible d'extraire l'écrou à sertir en aveugle du trou 4 selon le sens et la direction définis par la flèche 7, le bourrelet périphérique 9 formant une contre-dépouille. Simultanément, la surface de contact 2d a été déformée pour venir en appui contre la paroi latérale du trou 4, sur toute la hauteur du trou 4.

Ainsi mis en place, l'écrou à sertir en aveugle peut être utilisé pour visser un élément fileté tel qu'une vis dans l'alésage interne taraudé 1 c traversant le noyau 1 de part en part.

Comme on le constate sur la figure 2, l'écrou à sertir en aveugle une fois mis en place dépasse légèrement de la face postérieure 5b de la paroi mince 5, le dépassement présentant une hauteur h très faible. Cela permet d'éviter la présence d'une protubérance gênante à l'écart de la face postérieure 5b de la paroi mince 5, de sorte que l'on peut exploiter pleinement l'espace libre disposé derrière la face postérieure 5b de la paroi mince 5.

Lors de la pose de l'écrou à sertir en aveugle, celui-ci est inséré dans le trou 4 de la paroi mince 5 de telle sorte que la douille 2 dépasse très légèrement au-delà de la face postérieure 5b de la paroi mince 5 pour permettre au bourrelet périphérique 9 de venir se positionner en butée contre la face postérieure 5b de la paroi 5.

Ainsi, l'écrou à sertir de la figure 1 peut être utilisé dans des assemblages nécessitant une grande précision de positionnement et dans lesquels l'espace est compté. En effet, un tel écrou à sertir en aveugle ne présente pas, ou ne présente que très peu de dépassement à l'écart de la face postérieure 5b de la paroi mince 5 et ce dépassement de hauteur h est sensiblement constant et connu. En outre, pour une même épaisseur e de paroi 5 donnée, le dépassement à l'écart de la face antérieure 5a de la paroi mince 5, de hauteur H, est également sensiblement constant et connu (figure 2).

Il est à noter qu'un tel écrou à sertir est utilisable pour différentes épaisseurs e de paroi mince 5.

En effet, l'écrou à sertir des figures 1 et 2 est utilisable pour des épaisseurs e de paroi mince 5 inférieures ou sensiblement égales à la longueur L2 de la douille 2.

Dans le mode de réalisation des figures 1 et 2, le noyau 1 comporte une surface extérieure tronconique dont le diamètre va en croissant depuis son extrémité proximale 1 a jusqu'à son extrémité distale 1 b. Une telle configuration du noyau 1 permet de réaliser une expansion radiale progressive de la paroi déformable de la douille 2 lors de la pénétration du noyau 1 dans l'alésage interne 2c de la douille 2.

Sur la figure 1, l'extrémité proximale 1 a du noyau 1 est solidaire, selon une zone annulaire de liaison 8 de faible résistance mécanique, de l'extrémité distale 2b de la douille 2, le noyau 1 et la douille 2 étant coaxiaux.

L'écrou à sertir en aveugle selon l'invention est ainsi monobloc, ce qui évite le risque de perdre la douille 2. Lors de l'utilisation de l'écrou à sertir en aveugle, l'ouvrier n'aura ainsi pas à se préoccuper de savoir s'il dispose de suffisamment de douilles 2 à utiliser avec un certain nombre d'écrous 1, et vice-versa. On évite aussi des problèmes de stockage et de gestion d'éléments mécaniques de faible encombrement.

Le caractère monobloc de l'écrou à sertir en aveugle, ainsi que la forme de ses surfaces, permettent de réaliser celui-ci en une seule et unique opération de tournage, ce qui s'avère très économique.

L'opération de pose de l'écrou à sertir en aveugle est également rapide, l'utilisateur n'ayant pas à manipuler de multiples pièces. On réduit également le risque d'erreur lors de la pose, la douille 2 et l'écrou 1 étant initialement positionnés l'un par rapport à l'autre d'une façon unique et inaltérable.

Dans le mode de réalisation de la figure 1, la douille 2 comporte un alésage interne 2c cylindrique de section circulaire. La douille 2 comporte également une surface de contact annulaire 2d tronconique, avec une extrémité proximale 2a de diamètre extérieur D4 supérieur au diamètre extérieur D11 de la surface de contact 2d de la douille 2 dans le tronçon intermédiaire 45. Le fait que la douille 2 comporte un alésage interne 2c cylindrique de section circulaire et une surface extérieure tronconique permet, après la pénétration du noyau 1 dans l'alésage interne 2c de la douille 2 (figure 2), que la douille 2 présente après déformation une paroi de surface extérieure sensiblement cylindrique formant l'essentiel de la surface de contact 2d.

Comme on peut en effet le voir sur la figure 2, le diamètre extérieur D5' de l'extrémité distale 2b de la douille 2 est devenu sensiblement égal au diamètre extérieur D4 de l'extrémité proximale 2a de la douille 2. La douille 2 vient ainsi en appui contre la paroi latérale du trou 4 de façon homogène selon une surface de contact 2d annulaire cylindrique et sur toute la hauteur du trou 4. On répartit ainsi au mieux les contraintes induites dans la paroi mince 5 par l'installation de l'écrou à sertir en aveugle, et on rend maximale la surface de contact 2d entre la douille 2 et la paroi latérale du trou 4, afin d'obtenir une tenue optimale de l'écrou à sertir en aveugle dans le trou 4 de la paroi mince 5.

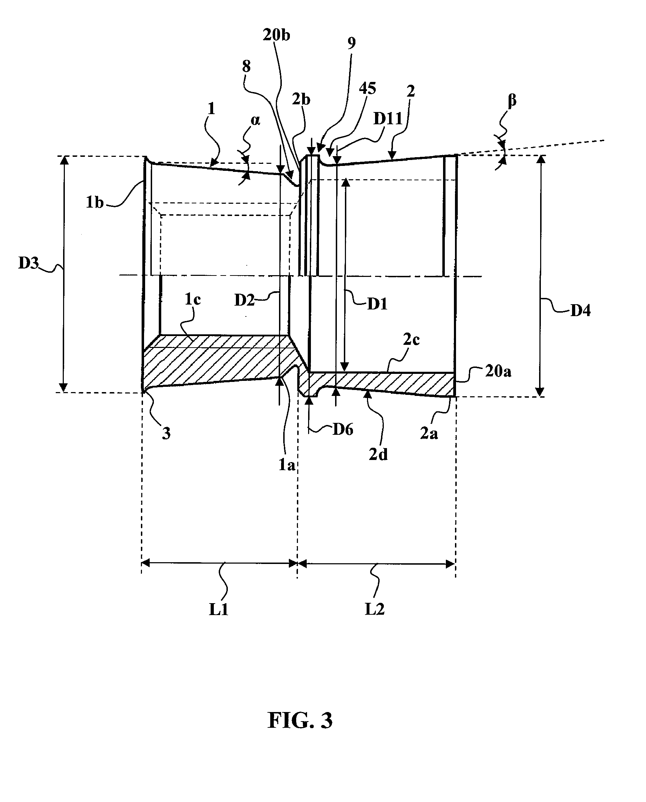

La figure 3 représente une variante du premier mode de réalisation illustré sur les figures 1 et 2. Sur la figure 3, le noyau 1 de l'écrou à sertir en aveugle comporte, au voisinage de son extrémité distale 1 b, une collerette périphérique 3 ayant un diamètre extérieur D3 qui est supérieur au diamètre intérieur D1 de l'alésage interne 2c de la douille 2 au voisinage de l'extrémité distale 2b de la douille 2.

Cette collerette périphérique 3 est destinée, selon un premier aspect, à stopper la pénétration du noyau 1 dans l'alésage interne 2c, en venant en butée contre la face postérieure 20b de la douille 2. On évite ainsi tout risque de voir le noyau 1 traverser en totalité la douille 2.

Selon un second aspect, à la fin de la pénétration du noyau 1 dans l'alésage interne 2c de la douille 2, la collerette périphérique 3 du noyau 1 vient encore déformer et augmenter le bourrelet périphérique 9, tout en assurant l'écrouissage du bourrelet périphérique 9 et/ou de la paroi 5. L'écrouissage augmente la dureté du métal constituant le bourrelet périphérique 9 et/ou la paroi 5, ce qui participe à une augmentation de la tenue mécanique de l'écrou à sertir sur la paroi mince 5. La matière écrouie du bourrelet périphérique 9 et/ou de la paroi 5 est en effet encore plus résistante pour s'opposer à toute tentative d'extraction de l'écrou à sertir en aveugle à l'écart de la paroi 5 dans le sens et la direction définis par la flèche 7 (figure 2).

Dans les écrous à sertir en aveugle illustrés sur les figures 1 et 3, le noyau 1 et la douille 2 ont des angles de cône α et β sensiblement égaux (figure 3). Ainsi, une fois que le noyau 1 a complètement pénétré dans l'alésage interne 2c de la douille 2, la douille 2 présente une surface extérieure de contact 2d sensiblement cylindrique afin de venir au mieux au contact avec la paroi latérale du trou 4 de la paroi mince 5 qui est elle aussi cylindrique.

Dans les écrous à sertir en aveugle illustrés sur les figures 1 à 3, le noyau 1 et la douille 2 ont des longueurs axiales L1 et L2 respectives sensiblement égales. Ainsi, après la pose de l'écrou à sertir en aveugle, le noyau 1 peut être totalement compris à l'intérieur de la douille 2, laquelle douille 2 ne dépasse pas ou très peu au-delà du noyau 1. On réalise ainsi un ensemble compact, sans matière inutile, et présentant des dépassements faibles et maîtrisés à l'écart des faces antérieure 5a et postérieure 5b de la paroi mince 5.

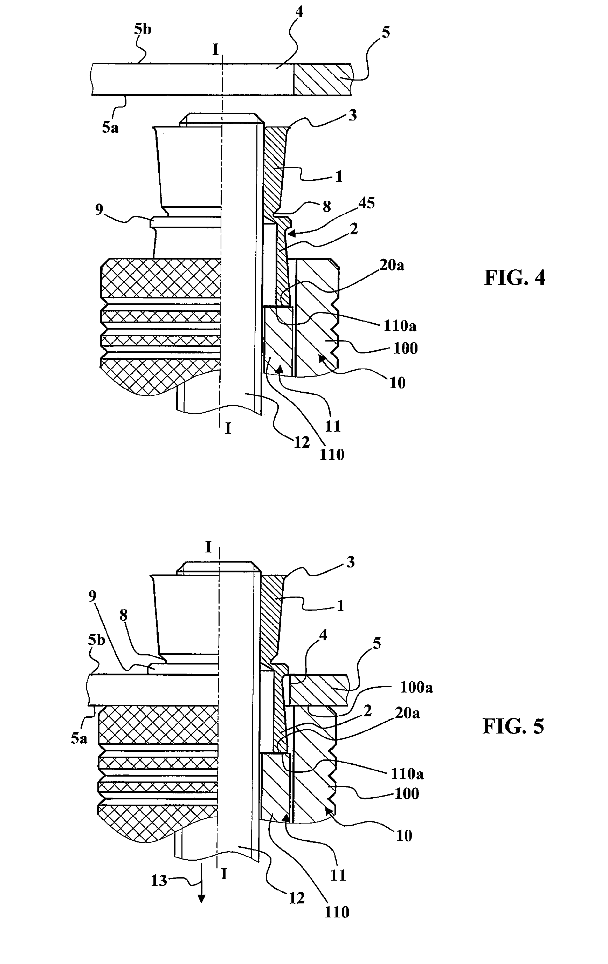

Pour la pose d'un écrou à sertir en aveugle selon le premier mode de réalisation illustré sur les figures 1 à 3, on peut utiliser un dispositif de pose représenté sur les figures 4 à 6. Le dispositif de pose comporte des premiers moyens de positionnement 10, positionnant le dispositif de pose par rapport à la paroi mince 5, en prenant appui sur la face antérieure 5a de la paroi mince 5. Des seconds moyens de positionnement 11 positionnent l'écrou à sertir en aveugle par rapport au dispositif de pose en réalisant une butée d'appui contre laquelle porte la face proximale 20a de la douille 2. Enfin, une tige filetée 12 est vissée dans l'alésage interne taraudé 1 c du noyau 1 en passant au travers de l'alésage interne 2c de la douille 2. Cette tige filetée 12 peut se déplacer axialement selon la direction définie par l'axe longitudinal I-I par rapport aux seconds moyens de positionnement 11.

De façon plus précise, les seconds moyens de positionnement 11 comprennent un premier tube 110, disposé de façon coaxiale à la tige filetée 12, et prenant appui à son extrémité 110a sur la face proximale 20a de la douille 2. Les premiers moyens de positionnement 10 comprennent un second tube 100, disposé de façon coaxiale au premier tube 110.

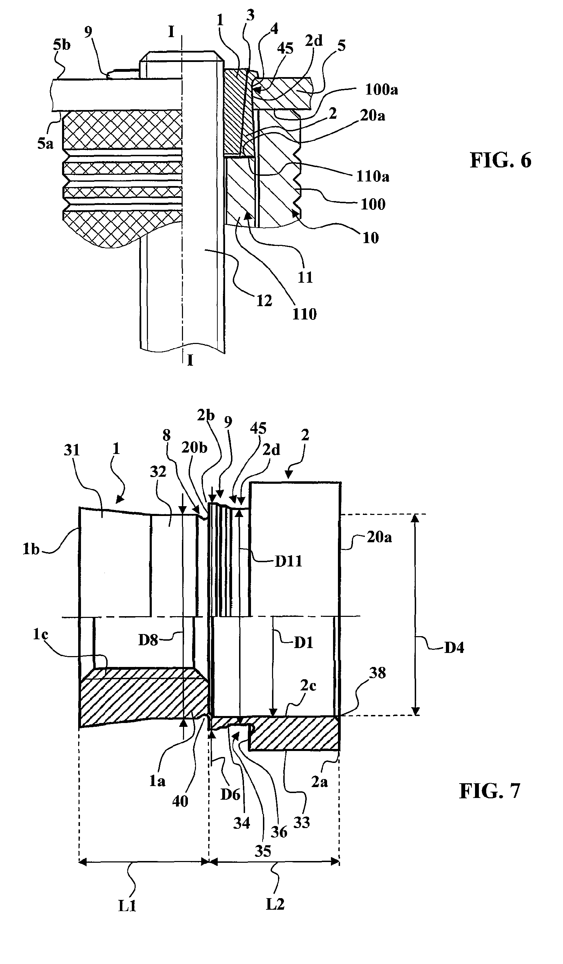

Un utilisateur pourra utiliser le dispositif de pose d'un écrou à sertir en aveugle décrit ci-dessus en effectuant au moins les étapes suivantes :
a) visser la tige filetée 12 du dispositif de pose dans l'alésage interne taraudé 1 c du noyau 1, en pénétrant dans le noyau 1 depuis l'extrémité proximale 1a du noyau 1 vers son extrémité distale 1 b,
b) positionner les seconds moyens de positionnement 11 en appui sur la face proximale 20a de la douille 2,
c) positionner le dispositif de pose par rapport à la face antérieure 5a de la paroi mince 5, en prenant de préférence appui, avec le second tube 100 des premiers moyens de positionnement 10, sur la face antérieure 5a de la paroi mince 5, afin d'engager la douille 2 dans le trou 4 destiné à recevoir l'écrou à sertir en aveugle,
d) effectuer, par l'intermédiaire de la tige filetée 12, une traction à l'écart de la paroi mince 5 selon le sens et la direction définis par la flèche 13 (figure 5), afin de faire pénétrer le noyau 1 dans la douille 2 (figure 6),
e) dévisser la tige filetée 12 en prise dans le noyau 1.

Lors de la pose de l'écrou à sertir en aveugle, celui-ci est inséré dans le trou 4 de façon à ce que le bourrelet périphérique 9 de la douille 2 dépasse tout juste au-delà de la face postérieure 5b de la paroi mince 5. Un tel positionnement est facilement obtenu grâce aux premiers moyens de positionnement 10 dont le second tube 100 vient porter selon son extrémité 100a contre la face antérieure 5a de la paroi mince 5.

Un tel positionnement, illustré sur la figure 5, est nécessaire pour que, lors de l'expansion de la douille 2, le bourrelet périphérique 9 vienne constituer un épaulement en butée contre la face postérieure 5b de la paroi mince 5.

La pose précise, fiable et sûre d'un écrou à sertir en aveugle selon le premier mode de réalisation de l'invention est ainsi grandement facilitée par l'utilisation du dispositif de pose décrit ci-dessus. Le procédé de pose est simple, rapide et sans risque de fausses manipulations par un ouvrier.

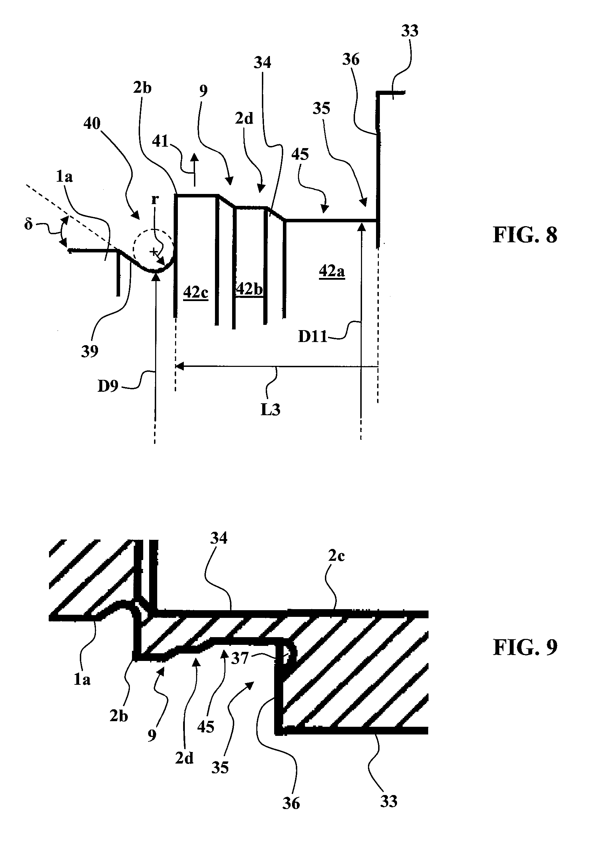

Un second mode de réalisation d'un écrou à sertir en aveugle selon l'invention est représenté sur la figure 7. Celui-ci comporte un noyau 1 avec un tronçon distal 31 tronconique dont le diamètre va en croissant en direction de l'extrémité distale 1b du noyau. Le noyau 1 comporte également un tronçon proximal 32 cylindrique à section transversale circulaire.

L'écrou à sertir en aveugle de la figure 7 comporte en outre une douille 2 avec un tronçon proximal 33 et un tronçon distal 34. Le tronçon proximal 33 comporte une section transversale supérieure au diamètre D7 du trou 4 de la paroi 5. Le tronçon distal 34 comporte quant à lui une paroi déformable, à section transversale de diamètre extérieur maximal peu inférieur au diamètre D7 du trou 4 de la paroi 5 et présentant une surface de contact 2d annulaire de douille. La douille 2 est ainsi en partie déformable : son tronçon distal 34, destiné à pénétrer dans le trou 4 de la paroi 5, est amené à se déformer.

Un épaulement de raccordement 35 à face frontale annulaire 36 relie les tronçons distal 34 et proximal 33 de la douille 2.

Comme dans le premier mode de réalisation de l'invention, la douille 2 comporte, au voisinage de son extrémité distale 2b, un bourrelet périphérique 9 dont le diamètre extérieur D6 est égal ou peu inférieur au diamètre du trou 4 de la paroi 5 dans laquelle l'écrou à sertir doit être installé.

Le tronçon proximal 32 cylindrique à section circulaire du noyau 1 comporte un diamètre extérieur D8 égal ou peu supérieur au diamètre intérieur D1 de l'alésage interne 2c de la douille 2.

Sur la vue de détail de la figure 9, on voit plus particulièrement que l'épaulement de raccordement 35 comporte un logement annulaire 37 ouvert sur la face frontale annulaire 36. Le logement annulaire 37 est disposé de préférence au voisinage du plus faible rayon de la face frontale annulaire 36.

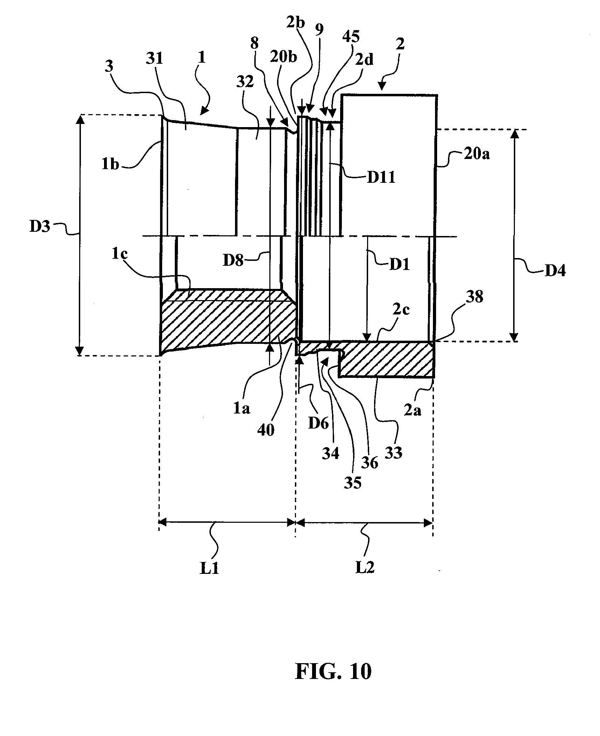

La figure 10 représente une variante du second mode de réalisation illustré sur la figure 7. Sur la figure 10, le noyau 1 de l'écrou à sertir en aveugle comporte, au voisinage de son extrémité distale 1b, une collerette périphérique 3 ayant un diamètre extérieur D3 qui est supérieur au diamètre intérieur D1 de l'alésage interne 2c de la douille 2 au voisinage de l'extrémité distale 2b de la douille 2.

La collerette périphérique 3 a les mêmes effets que ceux obtenus dans le premier mode de réalisation de l'invention, à savoir de stopper la pénétration du noyau 1 dans l'alésage interne 2c pour éviter tout risque de voir le noyau 1 traverser en totalité la douille 2, et d'augmenter la déformation du tronçon distal 34 de la douille 2 pour augmenter le bourrelet périphérique 9, tout en assurant le renforcement par écrouissage du bourrelet périphérique 9 et/ou de la paroi 5.

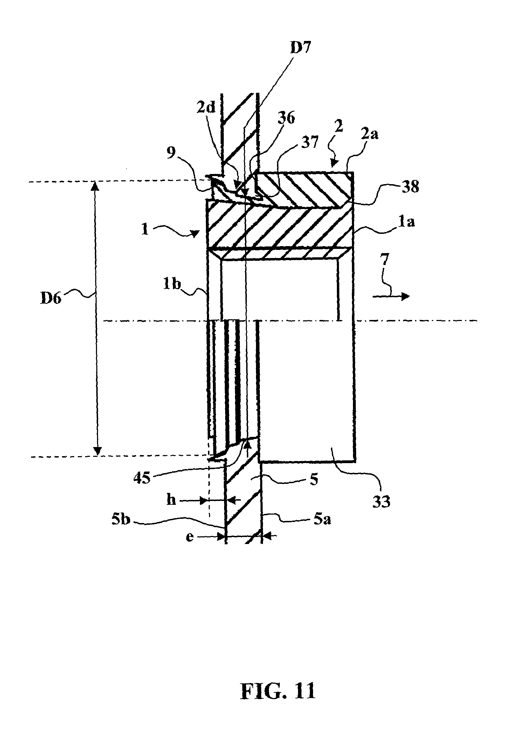

La figure 11 est une coupe longitudinale partielle sur laquelle l'écrou à sertir en aveugle de la figure 10 est représenté en position dans un trou 4 d'une paroi mince 5.

Le noyau 1 a été inséré dans l'alésage interne 2c de la douille 2. Lors de sa progression dans la douille 2, le noyau 1 est venu dilater radialement le tronçon distal 34 de la douille 2 muni de son bourrelet périphérique 9. En fin de pénétration du noyau 1 dans la douille 2, le bourrelet périphérique 9 présente un diamètre extérieur D6 supérieur au diamètre D7 du trou 4 pour venir en butée contre la face postérieure 5b de la paroi mince 5. Le bourrelet périphérique 9 s'oppose ainsi efficacement à toute tentative d'extraction de l'écrou à sertir dans le sens et la direction définis par la flèche 7. Simultanément, la surface de contact 2d a été déformée pour venir en appui contre la paroi latérale du trou 4, sur toute la hauteur du trou 4.

Le tronçon proximal 33 de la douille 2, comportant une section transversale supérieure au diamètre D7 du trou 4 de la paroi 5, vient en butée contre la face antérieure 5a de la paroi 5 et s'oppose efficacement à toute tentative d'enfoncement de l'écrou à sertir en aveugle dans le trou 4 selon le sens et la direction inverses de la flèche 7.

Comme dans le premier mode de réalisation de l'invention, on constate à nouveau que, une fois mis en place, l'écrou à sertir en aveugle dépasse légèrement au-delà de la face postérieure 5b de la paroi mince 5 selon une hauteur h très faible permettant d'exploiter pleinement l'espace libre disposé derrière la face postérieure 5b de la paroi mince 5.

Contrairement au premier mode de réalisation de l'invention, l'écrou à sertir des figures 7 à 11 est prévu pour être installé dans le trou 4 d'une paroi mince 5 d'épaisseur e définie peu inférieure ou égale à la longueur axiale L3 du tronçon distal 34 de la douille 2.

On voit sur la figure 11 que lors de la pénétration du noyau 1 dans la douille 2, la paroi mince 5 est pincée entre le bourrelet périphérique 9, la surface de contact 2d et le tronçon proximal 33. Ce pincement provoque le fluage d'une partie de la matière de la paroi 5 dans le logement annulaire 37 de la face annulaire 36 de la douille 2.

Ce fluage de la matière constitutive de la paroi 5 permet d'immobiliser efficacement la douille 2 de l'écrou à sertir, en rotation par rapport à la paroi 5. Finalement, la douille 2 ne peut acquérir aucun degré de liberté en translation axiale ou en rotation dans le trou 4 de la paroi 5.

Le fluage de la matière de la paroi 5 dans le logement annulaire 37 augmente la surface (annulaire) de contact entre la douille 2 et la paroi 5 : les efforts d'extraction axiale (flèche 7 sur la figure 11) sont ainsi mieux répartis.

Dans le second mode de réalisation illustré sur les figures 7 à 11, l'alésage interne 2c de la douille 2 comporte un chanfrein 38 à l'extrémité proximale 2a de la douille 2.

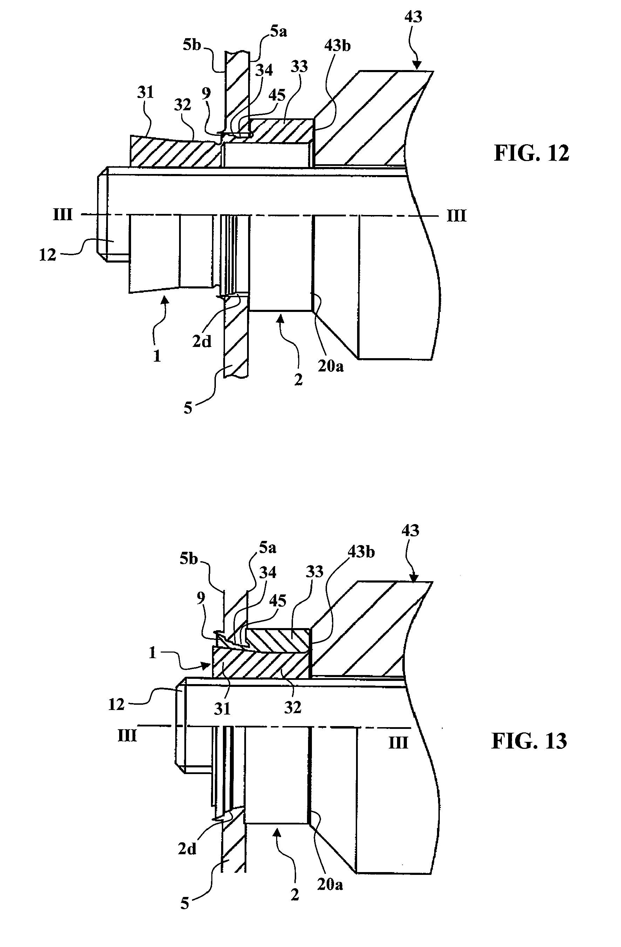

Ce chanfrein 38 permet, lors de la pose de l'écrou à sertir en aveugle au moyen d'un dispositif tel que celui qui sera ultérieurement décrit en relation avec les figures 12 et 13, de faire fluer radialement vers l'extérieur une partie de la matière constitutive du noyau 1 au voisinage de son extrémité proximale 1 a.

On voit plus particulièrement ce phénomène de fluage sur la figure 11 où un volume de matière du voisinage de l'extrémité proximale 1 a du noyau 1 est venu combler le chanfrein 38 de la douille 2. On forme ainsi une contre-dépouille du noyau 1 sur la douille 2, qui permet d'empêcher efficacement toute tentative de "dénoyautage" du noyau 1, c'est-à-dire de séparation de la douille 2 et du noyau 1 par une force exercée axialement dans le sens inverse de celui illustré par la flèche 7.

Le tronçon distal 31 tronconique du noyau 1 s'oppose quant à lui à toute extraction du noyau 1 sous l'effet d'une force axiale s'exerçant dans le sens défini par la flèche 7.

Le noyau 1 ne peut ainsi acquérir aucun degré de liberté en translation dans la douille 2.

Pour empêcher le noyau 1 d'acquérir un degré de liberté en rotation dans la douille 2, le diamètre extérieur D8 du tronçon proximal 32 cylindrique du noyau 1 et le diamètre intérieur D1 de l'alésage interne 2c de la douille 2 sont en outre choisis de façon à réaliser un montage serré de l'un dans l'autre. Ce montage serré s'effectue sur toute la surface extérieure du tronçon proximal 32 cylindrique du noyau 1. Cette surface étant relativement grande, on limite efficacement le risque que le noyau 1 acquière un degré de liberté en rotation dans la douille 2.

Il est à noter que la matière constitutive du noyau 1 qui flue dans le chanfrein 38 de la douille 2 vient également participer à l'immobilisation en rotation du noyau 1 dans la douille 2.

Dans le second mode de réalisation illustré sur les figures 7 à 11, le noyau 1 et la douille 2 sont solidaires l'un de l'autre selon une zone annulaire de liaison 8 de faible résistance mécanique. Une vue de détail de cette zone annulaire de liaison 8 est illustrée sur la figure 8. La zone annulaire de liaison 8 est formée par un chanfrein 39 pratiqué à l'extrémité proximale 1 a du noyau 1 et d'angle δ inférieur ou égal à 45 degrés, de préférence voisin de 35 degrés environ. Le chanfrein 39 est suivi d'une gorge annulaire 40 de faible rayon r. Avantageusement, le rayon r de la gorge annulaire 40 peut être voisin de 0,2 mm. Le diamètre D9 de la gorge annulaire 40 est inférieur au diamètre D1 de l'alésage interne 2c de la douille 2.

Lors de l'installation de l'écrou à sertir dans le trou 4 d'une paroi 5, et avant rupture de la zone annulaire de liaison 8, le fait de prévoir une gorge annulaire 40 rayonnée permet de transmettre un effort radial sur le tronçon distal 34 pour commencer à dilater radialement le tronçon distal 34 de la douille 2 selon le mouvement représenté par la flèche 41. Lorsque la zone annulaire de liaison 8 se rompt sous l'effet de la traction supplémentaire du noyau 1, le tronçon distal 34 de la douille 2 présente, au voisinage de l'extrémité distale 2b de la douille 2, un diamètre intérieur sensiblement agrandi. On fait ainsi pénétrer aisément dans un premier temps le tronçon proximal cylindrique 32 dans le tronçon distal 34 de la douille 2. On parvient ainsi à rentrer de façon rapide et sans trop d'efforts (après avoir rompu la zone annulaire de liaison 8) le tronçon proximal 32 dans la douille 2.

En poursuivant sa traction sur le noyau 1, l'utilisateur fait ensuite pénétrer le tronçon distal 31 tronconique du noyau 1 dans la douille 2 en insérant de façon serrée le tronçon proximal 32 dans le tronçon proximal 33 (l'ajustement entre les diamètres D1 et D8 étant prévu pour cela), ce qui poursuit la dilatation radiale du tronçon distal 34 de la douille 2.

Par la configuration de la zone annulaire de liaison 8, la matière constitutive de celle-ci reste en majeure partie solidaire de l'extrémité proximale 1 a du noyau 1 après la désolidarisation du noyau 1 et de la douille 2. Cette matière de la zone annulaire de liaison 8 vient, en fin de pénétration du noyau 1 dans la douille 2, fluer dans le chanfrein 38 de l'extrémité proximale 2a de la douille 2.

La configuration particulière de la zone annulaire de liaison 8 peut également être utilisée dans le premier mode de réalisation de l'invention représenté sur les figures 1 à 6. Il en est de même pour le chanfrein 38.

Dans le mode de réalisation illustré sur la figure 8, le bourrelet périphérique 9 du tronçon distal 34 de la douille 2 est conformé "en marches d'escalier", celui-ci comportant une pluralité de tronçons cylindriques 42a à 42c dont les diamètres extérieurs vont en croissant en direction de l'extrémité distale 2b de la douille 2.

On peut faire varier le nombre de tronçons cylindriques du tronçon distal 34 de la douille 2 en fonction de la longueur axiale L3 que l'on cherche à donner au tronçon distal 34 de la douille 2, la longueur axiale L3 dépendant de l'épaisseur e de la paroi 5 dans laquelle on souhaite installer l'écrou à sertir.

Lors de la dilatation radiale du tronçon distal 34 de la douille 2 par le noyau 1, et plus particulièrement par le tronçon distal 31 tronconique du noyau 1, le tronçon distal 34 de la douille 2 vient tout d'abord en contact avec la face postérieure 5b de la paroi 5 selon le tronçon 42c de plus grand diamètre. La surface de contact entre le tronçon cylindrique 42c et la face postérieure 5b de la paroi 5 étant relativement faible, et la force de traction exercée par l'opérateur lors de la pose de l'écrou à sertir étant grande, il s'exerce une forte pression au contact entre le tronçon cylindrique 42c et la face postérieure 5b de la paroi 5. Du fait de cette forte pression, le tronçon cylindrique 42c vient mordre et s'enfonce dans la paroi 5, ce qui provoque un fluage de celle-ci pour venir au contact du tronçon intermédiaire 45 (tronçon cylindrique 42a).

Lorsqu'on poursuit la dilatation du tronçon distal 34 de la douille 2, le tronçon cylindrique 42b vient également en contact avec la face postérieure 5b de la paroi 5. Le contact entre la douille 2 et la face postérieure 5b de la paroi 5 se fait alors selon une zone de surface plus grande. Et la pénétration du noyau 1 dans la douille 2 augmente le diamètre extérieur D11 du tronçon intermédiaire 45 (tronçon cylindrique 42a) pour venir au contact de la paroi latérale du trou 4.

Une fois la matière constitutive de la paroi 5 en contact avec la surface de contact 2d annulaire (tronçons cylindriques 42a à 42c), le pincement de la paroi 5 entre le bourrelet 9 et l'épaulement de raccordement 35 provoque le fluage de la matière constitutive de la paroi 5 au voisinage de sa face antérieure 5a pour aller combler le logement annulaire 37 prévu sur la face annulaire 36.

Après la pose de l'écrou à sertir, la douille 2 est au contact de la face postérieure 5b de la paroi 5 selon les tronçons cylindriques 42b et 42c qui sont en contre-dépouille. Toute tentative d'extraction axiale de l'écrou à sertir à l'écart de la face antérieure 5a de la paroi 5 provoque une pression qui est répartie sur la zone de contact entre la face postérieure 5b de la paroi 5 et les tronçons cylindriques 42b et 42c, surface qui est relativement grande.

En pratique, on a obtenu de bons résultats de tenue d'un écrou à sertir en prévoyant que :
- le trou 4 a un diamètre D7 supérieur, d'environ 0,05 mm à 0,15 mm, au diamètre maximal D6 du tronçon distal 34 de la douille 2 ;
- le tronçon proximal 33 de la douille 2 présente un diamètre extérieur D4 supérieur de 2 mm environ au diamètre D7 du trou 4 ;
- le logement annulaire 37 présente une section transversale semi-circulaire d'environ 0,2 mm de rayon ;
- la douille 2 comporte un tronçon distal 34 de longueur axiale L3 supérieure, d'environ 0,2 mm à 0,5 mm environ, à l'épaisseur e de la paroi 5 ;
- le noyau 1 comporte un tronçon distal 32 de diamètre extérieur D8 supérieur, de 0 mm à 0,15 mm environ, au diamètre D1 de l'alésage interne 2c de la douille 2.

Avec un tel écrou à sertir inséré dans un trou de 11 mm de diamètre d'une paroi de 1,5 mm d'épaisseur, on a obtenu une résistance à la traction (extraction) de 500 à 800 daN et une résistance au dénoyautage supérieure à 100 daN environ.

Pour la pose d'un écrou à sertir en aveugle selon le second mode de réalisation illustré sur les figures 7 à 11, on peut utiliser un dispositif de pose tel que représenté sur les figures 12 et 13. Ce dispositif de pose comporte une tige filetée 12 destinée à se visser dans l'alésage interne taraudé 1 c du noyau 1 en passant au travers de l'alésage interne 2c de la douille 2. Le dispositif comporte également des moyens de positionnement de l'écrou à sertir en aveugle par rapport au dispositif de pose, en réalisant une butée d'appui contre laquelle porte la face proximale 20a de la douille 2. En l'espèce, un tube 43 (ou "enclume") est disposé de façon coaxiale à la tige filetée 12 et prend appui à son extrémité distale 43b sur la face proximale 20a de la douille 2. La tige filetée 12 peut se déplacer longitudinalement selon la direction définie par l'axe longitudinal III-III par rapport aux moyens de positionnement.

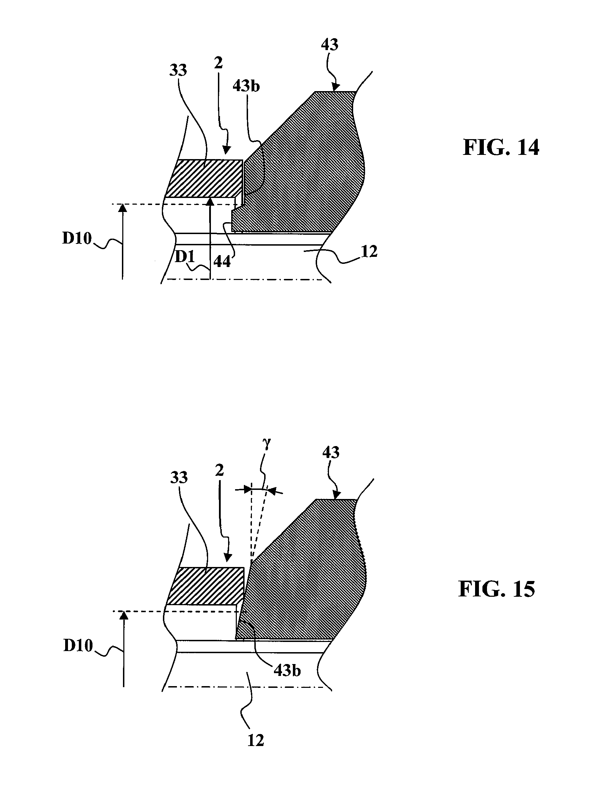

Les figures 14 et 15 illustrent différents types de tubes 43 ou "enclumes" permettant de favoriser le fluage d'une partie de la matière constitutive du noyau 1 dans le chanfrein 38 de la douille 2.

Le tube 43 de la figure 14 comporte, à son extrémité distale 43b, une excroissance annulaire 44 de diamètre extérieur D10 inférieur au diamètre extérieur D8 du tronçon proximal 32 du noyau 1 (figure 7), et inférieur de préférence au diamètre D9 de la gorge annulaire 40 de la zone de liaison 8 (figure 8).

Le tube 43 de la figure 15 comporte quant à lui une extrémité distale 43b biseautée selon un faible angle y.

L'excroissance annulaire 44 du tube 43 de la figure 14 et l'extrémité distale 43b biseautée du tube 43 de la figure 15 permettent de diriger la matière constitutive du noyau 1 au voisinage de son extrémité proximale 1 a (et le cas échéant de la zone de liaison 8 rompue) lors de son fluage dans le chanfrein 38 de la douille 2.

Un utilisateur peut utiliser le dispositif de pose d'un écrou à sertir en aveugle des figures 12 et 13 en effectuant au moins les étapes successives suivantes :
a") visser la tige filetée 12 du dispositif dans l'alésage interne taraudé 1 c du noyau 1, en pénétrant dans le noyau 1 depuis l'extrémité proximale 1 a du noyau 1 vers son extrémité distale 1b, jusqu'à positionner l'écrou à sertir en aveugle par rapport au dispositif de pose en réalisant une butée d'appui des moyens de positionnement (tube 43) contre la face proximale 20a de la douille 2,
b") insérer le noyau 1 et la douille 2 dans le trou 4, jusqu'à ce que l'épaulement de raccordement 35 de la douille 2 vienne en butée contre la face antérieure 5a de la paroi mince 5,
c") effectuer par l'intermédiaire de la tige filetée 12 une traction à l'écart de la paroi mince 5, afin de faire pénétrer le noyau 1 dans la douille 2,
d") dévisser la tige filetée 12 en prise dans le noyau 1.

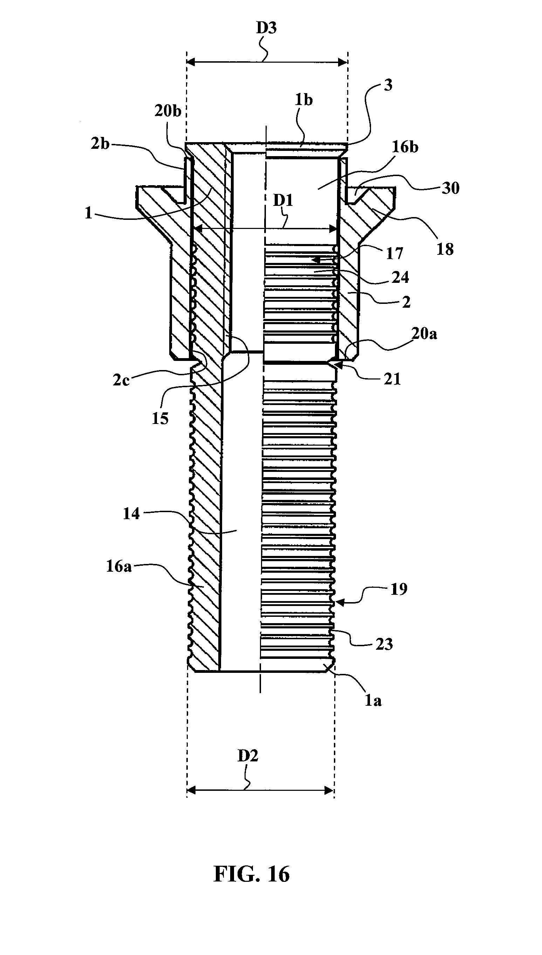

Considérons désormais la figure 16 où est illustré un autre type d'écrou à sertir dont la structure générale constitue en elle-même une invention indépendante des écrous à sertir des figures 1 à 15.

L'écrou à sertir en aveugle illustré sur la figure 16 comprend un noyau 1 avec des extrémités proximale 1 a et distale 1b, avec un alésage interne 14 ayant un filetage 15 sur une partie de sa longueur. Le noyau 1 est inséré dans une douille 2 à paroi déformable, comportant un alésage interne 2c la traversant depuis une face proximale 20a jusqu'à une face distale 20b et conformé pour recevoir le noyau 1.

La douille 2 comporte une extrémité distale 2b de diamètre intérieur D1 sensiblement égal au diamètre extérieur D2 de l'extrémité proximale 1 a du noyau 1.

Le noyau 1 est pourvu, au voisinage de son extrémité distale 1b, d'une collerette périphérique 3. Le diamètre extérieur D3 de la collerette périphérique 3 est supérieur au diamètre intérieur D1 de l'alésage interne 2c de la douille 2 au voisinage de l'extrémité distale 2b de la douille 2.

Dans le mode de réalisation illustré sur les figures 16 à 20, le noyau 1 est cylindrique et comporte un tronçon distal 16b destiné à être inséré dans la douille 2. Le tronçon distal 16b comporte des reliefs 17 sur sa surface extérieure. La douille 2 est cylindrique et déformable radialement.

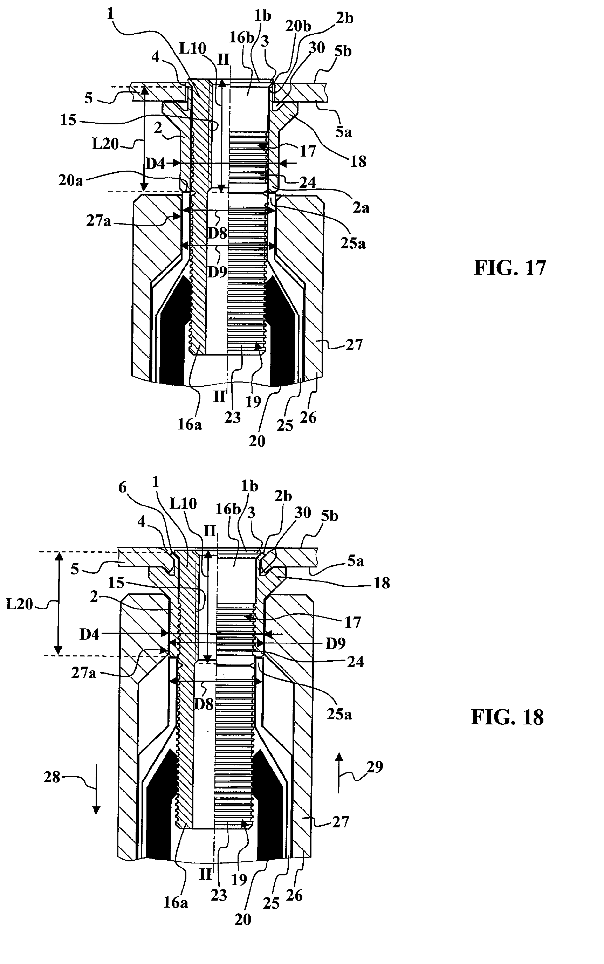

La douille 2 comporte une excroissance radiale 18, destinée à prendre appui sur la face antérieure 5a de la paroi mince 5 lorsque la douille 2 est insérée dans le trou 4 (figure 17), l'excroissance radiale 18 se développant radialement à l'écart de la surface extérieure de la douille 2 et en direction de l'extrémité distale 2b de la douille 2.

Le noyau 1 comporte également un tronçon proximal 16a qui comporte des moyens de connexion 19 à des moyens de traction 20 (figure 17) et qui est relié au tronçon distal 16b du noyau 1 par des moyens de liaison séparables 21.

Dans la réalisation illustrée sur la figure 16, les tronçons proximal 16a et distal 16b du noyau 1 sont reliés l'un à l'autre par un tronçon de section réduite sécable, constituant les moyens de liaison séparables 21.

Dans cette même réalisation, les reliefs 17 de la surface extérieure du tronçon distal 16b du noyau 1 comportent des stries annulaires 24 ou un filetage. Les stries annulaires 24 sont aisément réalisables par tournage, et ceci d'autant plus que le noyau 1 est à symétrie de révolution.

Dans cette même réalisation, les moyens de connexion 19 du tronçon proximal 16a du noyau 1 comportent également des stries annulaires 23 ou un filetage. De tels reliefs sont aisément réalisables par tournage, ceci d'autant plus que le noyau est à symétrie de révolution, et permettent de réaliser une prise de bonne qualité et sûre pour effectuer une forte traction en toute sécurité sur le tronçon proximal 16a du noyau 1. En outre, la répartition de l'effort de traction peut alors s'effectuer sur plusieurs stries annulaires 23 afin de répartir au mieux l'effort et d'éviter la séparation intempestive et inopinée des moyens de tractions 20 et du tronçon proximal 16a du noyau 1.

En alternative, les moyens de connexion 19 du tronçon proximal 16a du noyau 1 pourraient comprendre un alésage interne taraudé dans lequel serait insérée une tige filetée de traction semblable à celle qui est illustrée sur les figures 4 à 6, 12 et 13.

Sur les figures 16 à 20, l'excroissance radiale 18 est en forme de jupe périphérique continue, aisément réalisable par tournage comme toutes les parties du noyau 1.

Le procédé et le dispositif de pose de l'écrou à sertir en aveugle de la figure 16 sont représentés sur les figures 17 à 20.

Le dispositif de pose comporte :
- des moyens de positionnement 25 de l'écrou à sertir par rapport au dispositif de pose,
- des moyens de compression radiale 26 de la douille 2,
- des moyens de traction 20, destinés à venir se connecter aux moyens de connexion 19 du tronçon proximal 16a du noyau 1.

Dans le dispositif de pose illustré sur les figures 17 à 20, les moyens de traction 20 peuvent se déplacer axialement selon la direction longitudinale définie par l'axe II-II par rapport aux moyens de positionnement 25 de l'écrou à sertir.

Les moyens de positionnement 25 de l'écrou à sertir par rapport au dispositif de pose comprennent une extrémité distale tubulaire 25a destinée à venir en appui contre la face proximale 20a de la douille 2, en étant disposée de façon coaxiale au tronçon proximal 16a du noyau 1. L'extrémité tubulaire 25a a un diamètre extérieur D8 inférieur au diamètre extérieur D4 de l'extrémité proximale 2a de la douille 2.

Les moyens de compression radiale 26 de la douille 2 comprennent une filière 27, disposée de façon coaxiale à l'extrémité distale tubulaire 25a des moyens de positionnement 25 de l'écrou à sertir, avec un trou 27a de filière de diamètre D9 légèrement inférieur au diamètre extérieur D4 de la douille 2. La filière 27 peut se déplacer axialement selon la direction longitudinale définie par l'axe II-II par rapport aux moyens de positionnement 25 de l'écrou à sertir.

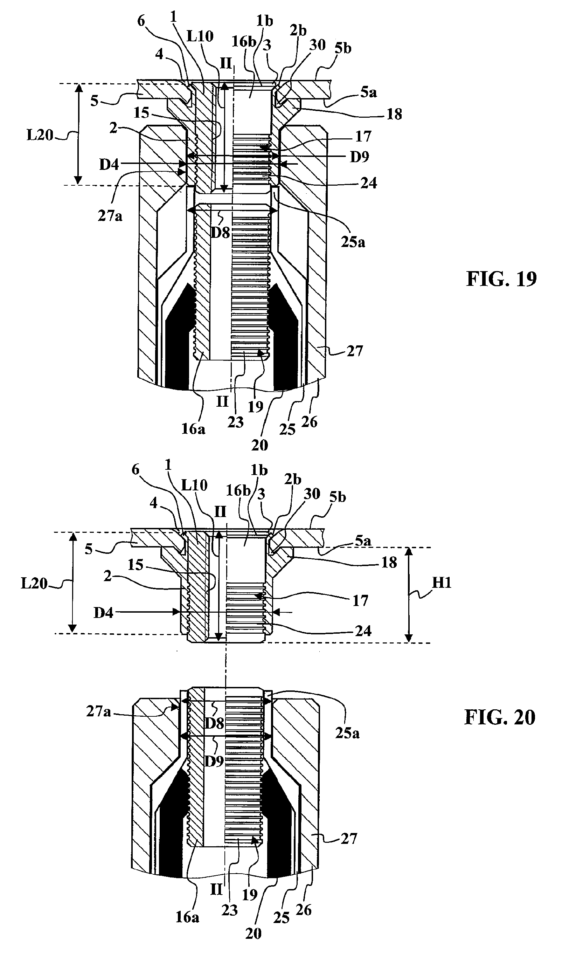

Le fonctionnement du dispositif de pose utilisé pour le second mode de réalisation d'écrou à sertir selon l'invention sera expliqué ci-dessous, au moyen du procédé lui correspondant. Le procédé de pose comporte au moins les étapes suivantes illustrées sur les figures 17 à 20 :
a') relier les moyens de traction 20 aux moyens de connexion 19 du tronçon proximal 16a du noyau 1,
b') positionner l'écrou à sertir par rapport au dispositif de pose, avec l'extrémité distale tubulaire 25a des moyens de positionnement 25 en appui contre la face proximale 20a de la douille 2,
c') insérer le noyau 1 et la douille 2 dans le trou 4 de la paroi mince 5, jusqu'à ce que l'excroissance radiale 18 de la douille 2 vienne en butée contre la face antérieure 5a de la paroi mince 5 (figure 17),
d') effectuer simultanément une traction sur le tronçon proximal 16a du noyau 1 par les moyens de traction 20 et une compression radiale de la douille 2 par les moyens de compression radiale 26, en effectuant un déplacement axial relatif entre les moyens de traction 20 et les moyens de compression radiale 26 les uns par rapport aux autres (le déplacement axial relatif est représenté respectivement par les flèches 28 et 29 sur la figure 18), jusqu'à séparation des tronçons distal 16b et proximal 16a du noyau 1 (figure 19),
e') retirer le dispositif de pose et le tronçon proximal 16a à l'écart de la paroi mince 5 (figure 20).

Lors de la traction effectuée avec les moyens de traction 20 sur le tronçon proximal 16a du noyau 1, comme on peut le voir sur la figure 18, la collerette périphérique 3 du noyau 1 vient déformer l'extrémité distale 2b de la douille 2. Cette déformation de l'extrémité distale 2b de la douille 2 provoque un pincement de la paroi mince 5 en périphérie du trou 4.

En poursuivant le mouvement des moyens de traction 20 illustré par la flèche 28, on déforme peu à peu et très localement la paroi mince 5 en périphérie du trou 4. La matière en périphérie du trou 4 vient alors fluer dans un logement annulaire 30 prévu sous la jupe périphérique continue de la douille 2, réalisant alors un ancrage très fiable de la douille 2 sur la paroi mince 5 (figure 18).

En effet, dans le cas d'une paroi 5 suffisamment mince pour fluer, la surface de paroi 5 contre laquelle vient en contre-dépouille l'extrémité distale 2b de la douille 2 est augmentée par ce phénomène de fluage. Cela permet de répartir les efforts axiaux appliqués sur l'écrou serti sur une plus grande surface, et donc d'obtenir une meilleure tenue de l'écrou serti.

Simultanément à la traction exercée par les moyens de tractions 20, on effectue un mouvement de même direction mais de sens opposé (représenté par la flèche 29 de la figure 18) des moyens de compression radiale 26. La filière 27 ayant un trou de diamètre D9 légèrement inférieur au diamètre extérieur D4 de la douille 2, celle-ci fait fluer la matière constitutive de la douille 2 dans les reliefs 17 de la surface extérieure du tronçon distal 16b du noyau 1. On immobilise ainsi de façon fiable et totale le tronçon distal 16b du noyau 1 par rapport à la douille 2.

Une fois que la douille 2 a été rendue solidaire de la paroi mince 5 et que le tronçon distal 16b du noyau 1 a été immobilisé par rapport à la douille 2 par fluage de la matière constitutive de la douille 2 dans les stries annulaires 24, la force de traction exercée par les moyens de traction 20 vient provoquer la séparation du tronçon distal 16b et du tronçon proximal 16a du noyau 1 (figure 19).

Après cette séparation des tronçons 16a et 16b, on peut retirer le dispositif de pose et le tronçon proximal 16a pour pouvoir utiliser l'écrou serti en aveugle en insérant un élément fileté tel qu'une vis dans le filetage 15 du tronçon distal 16b du noyau 1.

Un avantage technique particulier de cette structure d'écrou à sertir est son dépassement à l'écart de la face postérieure 5b de la paroi mince 5 de l'écrou serti qui est faible ou nul, voire négatif. Dans le cas de la figure 19, le dépassement est négatif, l'extrémité distale 1 b du noyau 1 étant située à l'écart de la face postérieure 5b en direction de la face antérieure 5a. Il est donc possible d'utiliser la totalité de l'espace disponible derrière la face postérieure 5b de la paroi mince 5.

Du côté de la face antérieure 5a de la paroi mince 5, le dépassement de l'écrou à sertir présente une hauteur H1 (figure 20), qui est certes plus importante que celle des premiers et seconds modes de réalisation, mais qui est également constante et précise. En effet, l'excroissance radiale 18 de la douille 2 vient régler cette cote de façon quasi parfaite. Seule la déformation de la périphérie du trou 4 et de l'extrémité distale 2b de la douille 2 est susceptible d'affecter quelque peu cette hauteur H1, mais celle-ci sera constante pour une paroi mince 5 d'épaisseur constante.

On peut donc avantageusement utiliser un écrou à sertir en aveugle tel qu'illustré sur les figures 16 à 20 dans des assemblages à paroi mince où l'on a besoin d'un dépassement faible voire nul du côté de la face postérieure 5b et où l'on a besoin d'une cote et d'un encombrement bien définis du côté de la face antérieure 5a de la paroi mince 5.

Sur les figures 16 à 20, le tronçon distal 16b du noyau 1 a une longueur axiale L10 sensiblement égale à la longueur axiale L20 de la douille 2.

On réalise ainsi un écrou à sertir en aveugle compact, sans partie dépassante inutile.

La présente invention n'est pas limitée aux modes de réalisation qui ont été explicitement décrits, mais elle en inclut les diverses variantes et généralisations contenues dans le domaine des revendications ci-après.

## Revendications

1. - Ecrou à sertir en aveugle, pour sertissage dans un trou (4) d'une paroi mince (5) ayant une face postérieure (5b) et une face antérieure (5a), l'écrou comprenant :
- un noyau (1), avec des extrémités proximale (1a) et distale (1 b), avec un alésage interne taraudé (1 c) le traversant de part en part, et avec, au moins au voisinage de son extrémité distale (1 b), une surface extérieure tronconique dont le diamètre va en croissant en direction de son extrémité distale (1 b),
- une douille (2) à paroi au moins en partie déformable, comportant un alésage cylindrique interne (2c) la traversant depuis une face proximale (20a) jusqu'à une face distale (20b) et conformé pour recevoir le noyau (1), l'alésage cylindrique interne (2c) ayant, au voisinage de l'extrémité distale (2b), un diamètre intérieur (D1) sensiblement égal au diamètre extérieur (D2) de l'extrémité proximale (1a) du noyau (1),
**caractérisé en ce que** la douille (2) comporte :
- au voisinage de son extrémité distale (2b), un bourrelet périphérique (9) ayant un diamètre extérieur (D6),
- un tronçon intermédiaire (45), adjacent au bourrelet (9), qui s'étend en direction de l'extrémité proximale (2a) de la douille (2), et qui présente un diamètre extérieur (D11) inférieur au diamètre extérieur (D6) du bourrelet (9),
- une surface de contact (2d) annulaire conformée pour venir en appui contre la paroi latérale du trou (4), sur toute la hauteur du trou (4), après déformation résultant de la pénétration du noyau (1) dans l'alésage interne (2c) de la douille (2).

2. - Ecrou à sertir en aveugle selon la revendication 1, **caractérisé en ce que** le noyau (1) et la douille (2) ont des longueurs axiales (L1, L2) respectives sensiblement égales.

3. - Ecrou à sertir en aveugle selon l'une des revendications 1 ou 2, **caractérisé en ce que** :
- le noyau (1) est pourvu, au voisinage de son extrémité distale (1b), d'une collerette périphérique (3),
- le diamètre extérieur (D3) de la collerette périphérique (3) est supérieur au diamètre intérieur (D1) de l'alésage interne (2c) de la douille (2) au voisinage de l'extrémité distale (2b) de la douille (2).

4. - Ecrou à sertir en aveugle selon l'une quelconque des revendications 1 à 3, **caractérisé en ce que**, avant usage, l'extrémité proximale (1a) du noyau (1) est solidaire, selon une zone annulaire de liaison (8) de faible résistance mécanique, de l'extrémité distale (2b) de la douille (2), le noyau (1) et la douille (2) étant coaxiaux.

5. - Ecrou à sertir en aveugle selon l'une quelconque des revendications 1 à 4, **caractérisé en ce que** :
- la douille (2) comporte un alésage interne (2c) cylindrique de section circulaire,
- la douille (2) comporte une surface extérieure tronconique, avec une extrémité proximale (2a) de diamètre extérieur (D4) supérieur au diamètre extérieur (D5) de l'extrémité distale (2b) de la douille (2).

6. - Ecrou à sertir en aveugle selon la revendication 5, **caractérisé en ce que** :
- le noyau (1) comporte une surface extérieure tronconique dont le diamètre va en croissant depuis son extrémité proximale (1 a) jusqu'à son extrémité distale (1 b),
- le noyau (1) et la douille (2) ont des angles de cône (α, β) sensiblement égaux.

7. - Ecrou à sertir en aveugle selon l'une quelconque des revendications 1 à 4, **caractérisé en ce que** :
- le noyau (1) comporte un tronçon distal (31) tronconique dont le diamètre va en croissant en direction de l'extrémité distale (1 b) du noyau (1),
- le noyau (1) comporte un tronçon proximal (32) cylindrique à section transversale circulaire,
- la douille (2) comporte un tronçon proximal (33) à section transversale supérieure au diamètre (D7) du trou (4) de la paroi (5),
- la douille (2) comporte un tronçon distal (34) à paroi déformable, à section transversale de diamètre extérieur maximal peu inférieur au diamètre (D7) du trou (4) de la paroi (5), destiné à pénétrer dans le trou (4) de la paroi (5),
- un épaulement de raccordement (35) à face frontale sensiblement annulaire (36) relie les tronçons distal (34) et proximal (33) de la douille (2).

8. - Ecrou à sertir en aveugle selon la revendication 7, **caractérisé en ce que** le tronçon proximal (32) cylindrique à section circulaire du noyau (1) comporte un diamètre extérieur (D8) égal ou peu supérieur au diamètre intérieur (D1) de l'alésage interne (2c) de la douille (2).

9. - Ecrou à sertir en aveugle selon l'une des revendications 7 ou 8, **caractérisé en ce que** l'épaulement de raccordement (35) comporte un logement annulaire (37) ouvert sur la face frontale annulaire (36), le logement annulaire (37) étant disposé de préférence au voisinage du plus faible rayon de la face frontale annulaire (36).

10. - Ecrou à sertir en aveugle selon l'une quelconque des revendications 7 à 9, **caractérisé en ce que** le tronçon distal (34) de la douille (2) comporte une pluralité de tronçons cylindriques (42a-42c) à section circulaire dont les diamètres extérieurs vont en croissant en direction de l'extrémité distale (2b) de la douille (2).

11. - Ecrou à sertir en aveugle selon l'une quelconque des revendications 7 à 10, **caractérisé en ce que** le tronçon distal (34) de la douille (2) a une longueur axiale supérieure, de préférence peu supérieure, à l'épaisseur de la paroi (5).

12. - Ecrou à sertir en aveugle selon l'une quelconque des revendications 1 à 11, **caractérisé en ce que** l'alésage interne (2c) de la douille (2) comporte un chanfrein (38) à l'extrémité proximale (2a) de la douille (2).

13. - Dispositif de pose pour poser un écrou à sertir en aveugle selon l'une quelconque des revendications 1 à 6, **caractérisé en ce qu'**il comporte :
- des premiers moyens de positionnement (10), positionnant le dispositif de pose par rapport à la paroi mince (5), en prenant de préférence appui sur la face antérieure (5a) de la paroi mince (5),
- des seconds moyens de positionnement (11), positionnant l'écrou à sertir en aveugle par rapport au dispositif de pose, réalisant de préférence une butée d'appui contre laquelle porte la face proximale (20a) de la douille (2),
- une tige filetée (12), destinée à se visser dans l'alésage interne taraudé (1 c) du noyau (1) en passant au travers de l'alésage interne (2c) de la douille (2), et pouvant se déplacer axialement par rapport aux seconds moyens de positionnement (11).

14. - Dispositif de pose selon la revendication 13, **caractérisé en ce que** :
- les seconds moyens de positionnement (11) comprennent un premier tube (110), disposé de façon coaxiale à la tige filetée (12), et prenant appui à son extrémité (110a) sur la face proximale (20a) de la douille (2),
- les premiers moyens de positionnement (10) comprennent un second tube (100), disposé de façon coaxiale au premier tube (110).

15. - Dispositif de pose d'un écrou à sertir en aveugle selon l'une quelconque des revendications 7 à 12, **caractérisé en ce que** :
- il comporte une tige filetée (12) destinée à se visser dans l'alésage interne taraudé (1 c) du noyau (1) en passant au travers de l'alésage interne (2c) de la douille (2),
- il comporte des moyens de positionnement de l'écrou à sertir en aveugle par rapport au dispositif de pose, réalisant une butée d'appui contre laquelle porte la face proximale (20a) de la douille (2), comportant de préférence un tube (43) disposé de façon coaxiale à la tige filetée (12) et prenant appui à son extrémité (43b) sur la face proximale (20a) de la douille (2),
- la tige filetée (12) peut se déplacer longitudinalement selon son axe (III-III) par rapport aux moyens de positionnement.

16. - Procédé de pose d'un écrou à sertir en aveugle par l'utilisation d'un dispositif selon la revendication 14, **caractérisé en ce qu'**il comporte au moins les étapes suivantes :
a) visser la tige filetée (12) du dispositif dans l'alésage interne taraudé (1 c) du noyau (1), en pénétrant dans le noyau (1) depuis l'extrémité proximale (1a) du noyau (1) vers son extrémité distale (1 b),
b) positionner les seconds moyens de positionnement (11) en appui sur la face proximale (20a) de la douille (2),
c) positionner le dispositif de pose par rapport à la face antérieure (5a) de la paroi mince (5), en prenant de préférence appui, avec le second tube (100) des premiers moyens de positionnement (10), sur la face antérieure (5a) de la paroi mince (5), afin d'engager la douille (2) dans le trou (4) destiné à recevoir l'écrou à sertir en aveugle,
d) effectuer, par l'intermédiaire de la tige filetée (12), une traction à l'écart de la paroi mince (5), afin de faire pénétrer le noyau (1) dans la douille (2),
e) dévisser la tige filetée (12) en prise dans le noyau (1).

17. - Procédé de pose d'un écrou à sertir en aveugle par l'utilisation d'un dispositif selon la revendication 14, **caractérisé en ce qu'**il comporte au moins les étapes suivantes :
a") visser la tige filetée (12) du dispositif dans l'alésage interne taraudé (1 c) du noyau (1), en pénétrant dans le noyau (1) depuis l'extrémité proximale (1a) du noyau (1) vers son extrémité distale (1 b), jusqu'à positionner l'écrou à sertir en aveugle par rapport au dispositif de pose en réalisant une butée d'appui des moyens de positionnement contre la face proximale (20a) de la douille (2),
b") insérer le noyau (1) et la douille (2) dans le trou (4), jusqu'à ce que l'épaulement de raccordement (35) de la douille (2) vienne en butée contre la face antérieure (5a) de la paroi mince (5),
c") effectuer par l'intermédiaire de la tige filetée (12) une traction à l'écart de la paroi mince (5), afin de faire pénétrer le noyau (1) dans la douille (2),
d") dévisser la tige filetée (12) en prise dans le noyau (1).
